# EUROPÄISCHE PATENTSCHRIFT

(11) **EP 0 693 673 B1**
(45) Veröffentlichungstag und Bekanntmachung des Hinweises auf die Patenterteilung: **26.04.2000**
(21) Anmeldenummer: 95110533.7
(22) Anmeldetag: 06.07.1995
(51) Int. Cl.: G01D 5/20

(54) **Magnetischer Wegsensor**
Magnetic displacement sensor
Palpeur magnétique de déplacement

(30) Priorität: 21.07.1994 DE 4425904
(43) Veröffentlichungstag der Anmeldung: 24.01.1996
(73) Patentinhaber: Tyco Electronics Logistics AG, 9323 Steinach (CH)
(72) Erfinder: Beichler, Johannes, Dr., D-63110 Rodgau (DE)
(74) Vertreter: Heinz-Schäfer, Marion

(56) Entgegenhaltungen:
- EP-A- 0 238 922
- EP-A- 0 635 922
- DE-A- 4 103 603
- PATENT ABSTRACTS OF JAPAN vol. 7 no. 140 (E-182) ,18.Juni 1983 & JP-A-58 053813 (TOKYO DENKI KAGAKU KOGYO KK) 30.März 1983,
- PATENT ABSTRACTS OF JAPAN vol. 18 no. 361 (C-1222) ,7.Juli 1994 & JP-A-06 093390 (HITACHI METALS LTD.) 5.April 1994,
- PATENT ABSTRACTS OF JAPAN vol. 13 no. 404 (E-817) ,7.September 1989 & JP-A-01 144700 (YOSHIDEN KK) 6.Juni 1989,

## Beschreibung

Die Erfindung betrifft einen magnetischen Wegsensor zur Erfassung der Lage eines Meßobjektes, das berührungslos längs eines als längsgestreckter Streifen ausgebildeten und mit einer über die gesamte Länge des zu erfassenden Weges reichenden Meßwicklung versehenen weichmagnetischen Magnetkerns bewegbar ist, bei dem das Meßobjekt den Magnetkern an der dem Meßobjekt benachbarten Stelle sättigt und so einen virtuellen Luftspalt erzeugt, und bei dem an den Enden des Magnetkerns zwei weitere, in Reihe zueinander geschaltete Spulen angeordnet sind.

Ein derartiger Wegsensor ist aus EP 238 922 bekannt. Hier sind die in Reihe zueinander angeordneten Spulen an eine Wechselspannungsquelle so angeschlossen, daß der Magnetkern von ihnen gegensinnig magnetisiert wird, während die längsgestreckte Meßwicklung an eine Auswerteeinrichtung zur Erfassung der induzierten Spannungsdifferenz angeschlossen ist.

Dieser Wegsensor liefert bei gleichen Abständen der Windungen der Meßwicklung voneinander eine linear zur Lage des Meßobjektes sich verändernde Ausgangsspannung und ist im Prinzip zur genauen Erfassung der Lage eines Meßobjektes sehr gut geeignet; besitzt aber den Nachteil, daß sein Ausgangssignal, das aus der Differenzspannung der in der längsgestreckten Sekundärwicklung induzierten Spannungen besteht, dann verfälscht wird, wenn ein magnetisches Gleichfeld oder ein niederfrequentes magnetisches Feld in Längsrichtung auf den Magnetkern wirkt, da durch ein Gleichfeld die Lage des virtuellen Luftspaltes und durch ein Wechselfeld die in der Meßwicklung induzierte Differenzspannung beeinflußt wird.

Als Kernmaterial kann man hier amorphe oder nanokristalline, weichmagnetische Streifen verwenden, die gegenüber kristallinem Material wesentlich bessere weichmagnetische Eigenschaften (geringere Koerzitivkraft, geringere Ummagnetisierungsverluste) besitzen, als dies bei normalem, kristallinem Material der Fall ist. Allerdings kann man - bedingt durch das Herstellverfahren amorpher Streifen durch Schnellabschreckung aus dem geschmolzenen Zustand - bei amorphem oder nanokristallinem Material nur Streifen mit geringer Dicke von etwa 20 bis 40 µm herstellen, so daß sich ein sehr dünner magnetischer Querschnitt ergibt. Dieser reicht zwar zur Führung des induzierten Wechselfeldes aus, bedingt aber eine schnelle Sättigung durch einwirkende magnetische Störfelder.

Ein derartiger Wegsensor ist auch aus DE 41 03 603 A1 bekannt. Hier sind die in Reihe zueinander angeordneten Spulen an eine Auswerteschaltung zur Erfassung der induzierten Differenzspannung angeschlossen. Das Meßobjekt erzeugt im Magnetkern einen virtuellen Luftspalt, dessen Position mit der Auswerteschaltung erfaßt werden kann.

Weiterhin ist ein derartiger Wegsensor auch aus EP 0 258 468 A1 bekannt. Dieses Dokument offenbart ein Verfahren zur induktiven Wegmessung, wobei die Messpule an eine Konstantstromquelle angeschlossen ist. Damit wird eine Stromänderung aufgrund einer Impedanzänderung, die von einer vom Meßobjekt verursachten Induktivitätsänderung herrührt, verhindert.

Ein Wegsensor mit wechselstromdurchflossener, längsgegestreckter Primärwicklung und zwei gegensinnig geschalteten Sekundärwicklungen ist aus der DE-OS 20 06 996 bekannt. Hier befindet sich eine Primärwicklung zwischen zwei Sekundärwicklungen auf einem Magnetkern, der einen in sich geschlossenen Kreis bildet. Zur Erzeugung eines virtuellen Luftspalts dient beispielsweise ein Kurzschlußring, der einen Streufluß verursacht. Je nachdem, an welcher Stelle der Primärwicklung sich der Kurzschlußring befindet, werden mehr oder weniger Windungen der Primärwicklung zur Speisung der Sekundärwicklungen, die sich zu beiden Seiten der Primärwicklung befinden, eine Spannung erzeugen. Die in den Sekundärwicklungen gebildete, durch entgegengesetzte Hintereinanderschaltung entstehende Differenzspannung ist damit abhängig von der Lage des Kurzschlußrings und damit des Meßobjektes, dessen Weg zu bestimmen ist.

Eine derartige Anordnung ist relativ unempfindlich gegen magnetische Störfelder, da diese gegensinnig in den zueinander parallelen Schenkeln des geschlossenen Magnetkerns wirken und sich so weitgehend aufheben.

Sie erfordert jedoch einen geschlossenen magnetischen Kreis und als Meßobjekt einen magnetischen Shunt, der diesen Kreis in zwei Teilkreise unterteilt. Sie ist damit im Vergleich zu anderen magnetischen Wegsensoren relativ teuer in der Fertigung und erfordert ein großes Bauvolumen, da der Magnetkern zwei längsgestreckte Schenkel, die miteinander verbunden sind, benötigt. Außerdem ändert sich die Induktivität der Wicklung vom Quadrat der Windungszahl abhängt. Damit erhält man ein Ausgangssignal, das nicht nur von der Konstruktion der Primärwicklung, sondern auch von der Lage des Meßobjektes abhängt. Ein linearer Zusammenhang mit der Lage des Meßobjektes ist damit schlecht zu verwirklichen.

Aufgabe der vorliegenden Erfindung ist es, den eingangs genannten, mit einem streifenförmigen Magnetkern versehenen Wegsensor so zu verbessern, daß er einerseits weiterhin gegenüber dem Wegsensor mit geschlossenem Magnetkreis besonders wirtschaftlich herstellbar ist, und andererseits unter Beibehaltung der Möglichkeit, auf einfache Weise eine lineare Abhängigkeit des Ausgangssignals von der Lage des Meßobjektes zu verwirklichen, gegenüber magnetischen Störfeldern unempfindlicher ist.

Diese Aufgabe wird erfindungsgemäß durch einen magnetischen Wegsensor gelöst, der einen weichmagnetischen Magnetkern und ein Meßobjekt 9 aufweist, wobei der Magnetkern aus einem längsgestreckten Streifen aus weichmagnetischem, kristallinem Material und aus einem oder mehreren Streifen aus amorphem oder nanokristallinem Material besteht und mit einer über die gesamte Länge des zu erfassenden Weges reichenden Meßwicklung versehen ist. Das Meßobjekt ist berührungslos längs dieses Magnetkerns bewegbar und sättigt den Magnetkern an der dem Meßobjekt benachbarten Stelle zur Erzeugung eines virtuellen Luftspalts. An den Enden des Magnetkerns sind zwei weitere, in Reihe zueinander geschaltete Spulen angeordnet, wobei den Spulen eine Auswerteschaltung zur Erfassung der induzierten Differenzspannung nachgeschaltet ist und wobei die Meßwicklung an eine Konstantstromquelle angeschlossen ist, die einen Wechselstrom mit konstanter Amplitude unabhängig von dem induktiven Widerstand der Meßwicklung erzeugt.

Vorteilhafte Weiterbildungen sind in den Unteransprüchen beschrieben.

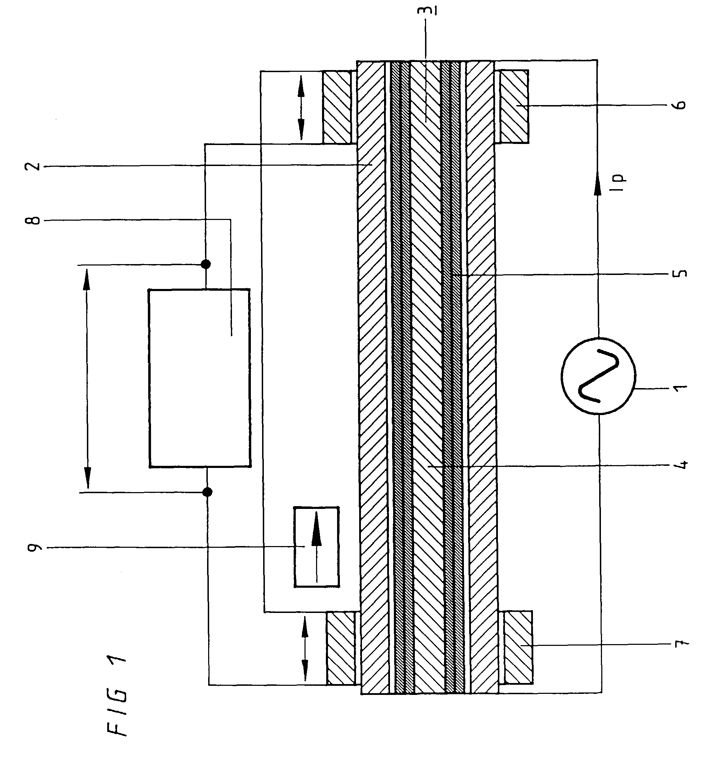

Ein Ausführungsbeispiel ist in der Zeichnung dargestellt. An eine Konstantstromquelle 1 ist eine längsgestreckte Meßwicklung 2 angeschlossen, die einen Magnetkern 3 umgibt. Die Konstantstromquelle 1 liefert unabhängig von der sich mit der Lage des Meßobjektes (9) verändernden Induktivität der Meßwicklung 2 einen konstanten Strom Ip, so daß die in den Spulen 6 und 7 induzierten Spannungen nur von der Anzahl der Windungen der Meßwicklung 2 beiderseits des durch das Meßobjekt 9 erzeugten virtuellen Luftspaltes abhängen.

Der Magnetkern 3 besteht aus einem längsgestreckten Streifen 4 aus weichmagnetischem, kristallinem Material sowie aus mehreren Streifen 5 aus weichmagnetischem amorphem Material, die zu beiden Seiten des Streifens 4 aus kristallinem Material angeordnet sind. Mit Abstand voneinander an den Enden des Magnetkerns 3 befinden sich zwei Spulen 6 und 7, die so hintereinandergeschaltet sind, daß die durch einen Fluß im Magnetkern 3 induzierten Spannungen einander entgegengerichtet sind. An die Spulen 6 und 7 ist eine Auswerteschaltung 8 angeschlossen, die in bekannter Weise einen Meßwert für die Stellung des Meßobjektes 9, das beispielsweise ein Dauermagnet ist, auswertet.

Die bessere Unempfindlichkeit gegen magnetische Störfelder gegenüber der Anordnung nach EP 238 922 ergibt sich dadurch, daß niederfrequente Wechselfelder, die den Magnetkern 3 durchsetzen - im Gegensatz zu der bekannten Anordnung - ebenfalls in den Spulen 6 und 7 Spannungen induzieren, die sich gegenseitig aufheben, da das den Magnetkern 3 durchsetzende Magnetfeld unabhängig von der Lage des Meßobjektes 9 jeweils im Bereich der Spule 6 als auch im Bereich der Spule 7 die gleiche Größe hat.

Der eingeprägte Strom in der Meßwicklung 2 gewährleistet unabhängig von der Lage des Meßobjektes 9 und der dadurch bedingten unterschiedlichen Induktivität der magnetisch durch den virtuellen Luftspalt in zwei Teile geteilten Meßwicklung 2, daß immer ein Strom mit konstanter Amplitude durch jede Windung fließt, so daß bei gleichem Abstand jeweils zweier benachbarter Windungen eine lineare Abhängigkeit der an der Reihenschaltung der Spulen 6 und 7 anliegenden Ausgangsspannung von der Lage des Meßobjektes auftritt. Andererseits kann man durch unterschiedlichen Windungsabstand auch andere, definierte Abhängigkeiten einstellen.

Zur Verbesserung der Störempfindlichkeit infolge von einwirkenden Gleichfeldern dient der weichmagnetische, kristalline Magnetkern 4, der gegenüber den Streifen 5 aus amorphem Material einen größeren Querschnitt sowie eine höhere Permeabilität haben kann, ohne daß sehr viele Streifen übereinanderzuschichten sind. Damit führen auch relativ große Gleichfelder nicht zur Sättigung des Magnetkerns 3 und damit zur Verschiebung des durch das Meßobjekt 9 hervorgerufenen virtuellen Luftspaltes.

Die erfindungsgemäße Anordnung schafft somit eine gegen magnetische Störfelder unabhängige Meßanordnung, die sehr einfach aufgebaut ist und in ihren Abmessungen relativ klein gehalten werden kann, da kein geschlossener Magnetkreis erforderlich ist. Besonders einfach wird der Aufbau, wenn der kristalline Streifen 4 und die amorphen Streifen 5 miteinander nicht verklebt, sonder von den Wicklungen der Meßwicklung 2 zusammengehalten werden. Auf diese Weise erreicht man eine besonders kostengünstige Fertigung. Es ist allerdings auch möglich, die Streifen 4 und 5 miteinander zu verkleben oder anderweitig zu verbinden. Vorteilhafterweise können die Streifen 5 auch aus nanokristallinem Material bestehen, das sich durch Ankristallisation amorpher Streifen herstellen läßt.

## Patentansprüche

1. Magnetischer Wegsensor zur Erfassung der Lage eines Meßobjektes (9), der einen weichmagnetischen Magnetkern (3) und ein Meßobjekt (9) aufweist, wobei der Magnetkern (3) aus einem längsgestreckten Streifen (4) aus weichmagnetischem, kristallinem Material und aus einem oder mehreren Streifen (5) aus amorphem oder nanokristallinem Material besteht und mit einer über die gesamte Länge des zu erfassenden Weges reichenden Meßwicklung (2) versehen ist, und das Meßobjekt (9) berührungslos längs dieses Magnetkerns (3) bewegbar ist zur Sättigung des Magnetkerns (3) an der dem Meßobjekt (9) benachbarten Stelle und zur Erzeugung eines virtuellen Luftspalts, und bei dem an den Enden des Magnetkerns (3) zwei weitere, in Reihe zueinander geschaltete Spulen (6, 7) angeordnet sind, wobei den Spulen (6, 7) eine Auswerteschaltung (8) zur Erfassung der induzierten Differenzspannung nachgeschaltet ist und wobei die Meßwicklung (2) an eine Konstantstromquelle (1) angeschlossen ist, zur Erzeugung eines Wechselstroms (I_{P}) mit konstanter Amplitude unabhängig von dem induktiven Widerstand der Meßwicklung (2).

2. Magnetischer Wegsensor nach Anspruch 1, bei dem der Streifen (4) aus weichmagnetischem Material und die amorphen oder nanokristallinen Streifen (5) durch die aufgewickelte Meßwicklung (2) miteinander verbunden sind.

## Claims

1. Magnetic displacement sensor for detecting the position of an object (9) to be measured, having a soft-magnetic core (3) and an object (9) to be measured, where the magnetic core (3) comprises a longitudinally stretched strip (4) made of soft-magnetic, crystalline material and one or more strips (5) made of amorphous or nanocrystalline material and is provided with a measurement winding (2) extending over the entire length of the displacement to be detected, and the object (9) to be measured can be moved contactlessly along this magnetic core (3) in order to saturate the magnetic core (3) at the location adjacent to the object (9) to be measured, and in order to produce a virtual air gap, and in which two further coils (6, 7) are arranged at the ends of the magnetic core (3), the said coils being connected in series with one another, where an evaluation circuit (8) for detecting the induced differential voltage is connected downstream of the coils (6, 7), and where the measurement winding (2) is connected to a constant-current source (1), for producing an alternating current (I_{P}) with a constant amplitude irrespective of the inductive reactance of the measurement winding (2).

2. Magnetic displacement sensor according to Claim 1, in which the strip (4) made of soft-magnetic material and the amorphous or nanocrystalline strips (5) are connected to one another by the wound-measurement winding (2).

## Revendications

1. Capteur de déplacement magnétique pour détecter la position d'un objet de mesure (9) qui présente un noyau magnétique (3) à magnétisme doux et un objet de mesure (9), le noyau magnétique (3) étant constitué d'une bande allongée (4) faite d'un matériau à magnétisme doux, cristallin, et d'une ou plusieurs bandes (5) d'un matériau amorphe ou nanocristallin et étant muni d'un enroulement de mesure (2) qui s'étend sur toute la longueur du déplacement à détecter, et l'objet de mesure (9) pouvant être déplacé le long de ce noyau magnétique (3) sans contact matériel pour saturer le noyau magnétique (3) à l'endroit voisin de l'objet de mesure (9) et pour produire un entrefer virtuel, et dans lequel, aux extrémités du noyau magnétique (3) sont disposées deux autres bobines (6, 7) montées en série entre elles, un circuit d'évaluation (8) destiné à détecter la tension différentielle induite étant connecté en aval des bobines (6, 7) et l'enroulement de mesure (2) étant raccordé à une source de courant constant (1) pour la production d'un courant alternatif (Ip) d'amplitude constante indépendamment de la résistance inductive de l'enroulement de mesure (2).

2. Capteur de déplacement magnétique selon la revendication 1, dans lequel la bande (4) faite d'une matière à magnétisme doux et les bandes amorphes ou nanocristallines (5) sont jointes par l'enroulement de mesure (2) enroulé.
